(19) Europäisches Patentamt
European Patent Office
Office européen des brevets

(11) **EP 2 711 523 A1**

(12) **EUROPEAN PATENT APPLICATION**

(43) Date of publication:
**26.03.2014 Bulletin 2014/13**

(51) Int Cl.:
*F02B 41/10* [(2006.01)]   *F02B 37/00* [(2006.01)]

(21) Application number: **12185627.2**

(22) Date of filing: **24.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FPT Motorenforschung AG**
**9320 Arbon (CH)**

(72) Inventor: **Maier, Christian**
**9320 Arbon (CH)**

(74) Representative: **Cinquantini, Bruno et al**
**Notarbartolo & Gervasi S.p.A.**
**Corso di Porta Vittoria, 9**
**20122 Milano (IT)**

(54) **Method for controlling a power turbine of an hybrid engine apparatus**

(57)     The present invention relates to a hybrid engine apparatus and in particular to a method for controlling a power turbine of said apparatus. The method comprises the step of calculating the real value of an operative parameter of the power turbine. Said parameter is calculated as a function of the rotational speed of the power turbine and is characteristic of the real efficiency of the same turbine. The method further comprises the step of comparing said real value with at least a reference value corresponding to a required value of efficiency for the turbine. If the real efficiency is lower than said minimum required value of efficiency, then the rotational speed of the power turbine is changed by means of an asynchronous machine until the real parameter corresponds to an efficiency greater than or equal to said required efficiency.

Fig. 1

EP 2 711 523 A1

**Description**

<u>Field of the invention</u>

The present invention relates to a hybrid engine apparatus and in particular to a method for controlling a power turbine of said apparatus. The method according to the present invention could be implemented, for example, for controlling the low pressure turbine of an hybrid engine apparatus having a single turbo-compound stage or a double turbo-compound stage. In any case the method according to the invention can be used to control the speed of a power turbine of an hybrid engine apparatus suitable to generate electric energy useful to supply an accumulator and/or an electrical motor of the hybrid apparatus.

**Description of the prior art**

As known, an hybrid engine apparatus combines a conventional combustion engine propulsion system with an electric propulsion system. The presence of such electric system is intended to achieve either better fuel economy for the vehicle or a better performance. In the field of industrial vehicles many different kinds of hybrid engine apparatuses have been proposed. In particular the hybrid engine apparatus (HEA) can have different configuration as function, for example, of the performance required. In a first possible configuration, the HEA can be provided with a turbo-compound system defined by at least a compressor (also called charger or supercharger), arranged along the air intake line of the thermal engine. Said compressor is operated by an "high pressure turbine" (HPT) arranged along the exhaust line of the thermal engine. Typically, the HEA also comprises a "low pressure turbine" (LPT) by means of which electric energy is generated to be stored into an accumulator. At least one electric motor, supplied by such accumulator, is mechanically connected to the thermal engine shaft usually by means of a transmission comprising a clutch. This solution allows to provide, or not, an additional torque to the engine shaft which adds up to that generated by the thermal engine.

In an alternative known solution, the HEA can be provided with a low pressure compressor (LPC) and a high pressure compressor (HPC) arranged along the air intake line of the thermal engine and a high pressure turbine (HPT) and a low pressure turbine (LPT) arranged along the exhaust gas line. According to a well-known "traditional" layout the HPC can be operated by the HPT while the LPC can be operated by the engine shaft or by an electric motor supplied by an accumulator so as to generate a double turbo-charging system. According to a recent proposal disclosed in the patent application PCT/EP2012/060120, the LPC compressor can be operated by the HPT turbine according to a layout substantially "inversed" with respect to the "traditional" one above described. In both the cases (traditional and inversed layout), the compressor not connected to the HPT (LPC for the classical layout and HPC for the inversed layout) can be operated by the engine shaft or by an electric motor supplied by an accumulator. At the same time in both the cases (traditional and inversed layout) the LPT can act as a "generator" of electric energy which is stored in an accumulator.

In any of the possible configurations above disclosed it has been noted that the efficiency of the hybrid system is strictly connected to efficiency of the power turbine which acts as generator. In particular the efficiency of the power turbine changes in function of the exhaust mass flow rate conditions which determine a corresponding variation of the operative point of the turbine. More in detail, the exhaust mass flow of the engine depends mainly on the following parameters: the engine rotational speed, the boost pressure, the volumetric efficiency of the engine and the fuel consumption.

The exhaust mass flow could be actually controlled by using a variable geometry turbine (VTG) as power turbine or as high pressure turbine (HPT). The mass flow rate could be increased by increasing the boost pressure that is by closing the VGT. However this intervention causes more pumping work and less efficiency of the engine. On the other hand, if the VTG is open then the backpressure and boost pressure will decrease. This cause a decrease of the exhaust mass flow. Consequently the temperature of the exhaust flow rises and the combustion efficiency decreases because of the changing of Lambda value. Therefore the regulation of the exhaust flow rate by using a VGT can not be regarded as satisfactory.

According to a possible theoretical strategy, the desired efficiency of a power turbine (LPT) with a fixed geometry could be achieved by modulating the exhaust gas properties that means by modulating the exhaust gas pressure, the exhaust gas temperature and the exhaust gas specific capacity.

This strategy is quite complicated because it requires the management of three parameters two of which (the exhaust gas pressure and the exhaust gas temperature) have to be modulated with the combustion. This could be theoretically possible but it would require to run the engine out of its BSFC (Brake Specific Fuel consumption) and mission optimum. Furthermore the exhaust gas pressure and the exhaust gas temperature have to be limited and can not be exceeded for controlling the exhaust gas properties.

According to another aspect, the expansion ratio over the power turbine could be controlled by using an exhaust flap (valve) downstream the same turbine. When this flap is closed the expansion ratio of the upstream turbines (HPT and LPT) decreases. However this control method actually increase the fuel consumption of the engine and therefore it can not be regarded as convenient.

In order to control the exhaust gas temperature through the power turbine, an external burner could be used upstream the same turbine. Such a burner could actually increase the temperature of the exhaust gas before the power turbine. However this solution is not feasible because it would require extra costs by increasing the fuel consumption as well.

Therefore, from what above, the optimum efficiency of the power turbine could theoretically achieved by modulating the gas properties (pressure, temperature) of the gas for each speed of the power turbine with a fixed geometry. However a control based on the exhaust gas properties is not actually feasible because it would influence the combustion process and would increase the fuel consumption by causing, as a matter of fact, worse operating conditions of the engine.

It has been noted that the efficiency and also the reliability of an hybrid system/apparatus is strictly connected to the running conditions of the power turbine. Indeed if the power turbine runs too fast, its impeller could exceed the maximum rim speed of the same impeller. This would lead to the burst of the turbine. This event is a fatal mechanical damage which can have negative repercussions on other parts downstream the turbine such as, for example, the after treatment system, the muffler, etc. That means the control of the LPT is actually a strongly felt necessity.

Moreover the variation of the running conditions of the power turbine determines a corresponding variation of its "backpressure" (i.e. the pressure downstream the HPT and upstream the LPT) which determines in its turn a variation of the expansion ratio of the HPT. On this point if the low pressure turbine (LPT) runs too slow, the compressor operated by the high pressure turbine (HPT) could be over speeded.

Indeed it is known that the turbo charger power balance typically requires that the impeller of the compressor is 16% larger that the impeller of the turbine. This aspect causes an over speed of the compressor because the impeller of the compressor will exceed the maximum rim speed before that the impeller of the turbine. In order to avoid this event, a waste gate (WG) or a variable geometry turbine are normally used. The WG allows the exhaust gases to bypass the turbine, while the VGT acts by varying the acceleration of the exhaust gas through the turbine so as to vary the corresponding pressure ratio. The compressor is operatively matched to the turbine at operating points characteristic of lower mass flow and power. This matching can provide very good transient performance, but it is actually over speeded at rated power. For this reason, as the case, a part of the mass-flow is waste-gated by the WG or the VGT is open to decrease the expansion ratio. This interventions avoid the overspeed.

For this reason in the most of the known solutions it is typically necessary to provide a WG or a VGT. These solutions are critical in terms of costs and also in terms of reliability. In other known solutions, the compressor connected to the HPT is actually matched for rated power without using a WG or a VTG. That is the high pressure turbine has a fixed geometry.

However these solutions have a very bad transient response and they do not allow to achieve an high torque at low engine speeds. Further such solutions present very high smoke values during the acceleration and operation cycle. A consequence of this condition is the blocking of the soot filter. Other drawbacks are the high fuel consumption in the transient period and a very high exhaust temperature at low engine speed which can disadvantageously damage the after treatments systems.

From what above, it is clear that a reliable control of the LPT is actually a strongly felt necessity in order to avoid the drawbacks above indicate. However the most of the hybrid engine apparatuses do not comprise any control regarding this aspect. Consequently the most of the hybrid engine apparatus are actually still affected by the drawbacks above indicated.

## Summary of the invention

Therefore the main object of the present invention is to provide a method control method of a turbine which allows to overcome the above indicated drawbacks. Within this aim, a first purpose of the present invention is to provide a method for controlling a power turbine of an hybrid engine apparatus having one or more turbo-compound systems with a classical or inversed layout. Another purpose of the present invention is to provide a method for controlling a power turbine which allows such turbine to work in the best efficiency conditions in every operating point without affecting the engine running conditions. Another purpose of the present invention is to provide a method for controlling a power turbine which is reliable, easy to implement at competitive costs.

This main objects and these purposes are achieved by a method for controlling, a power turbine of a turbo-compound engine apparatus (especially an hybrid engine apparatus) which comprises:

- an internal combustion engine having an air intake line and a gases exhaust line;
- at least one compressor on said air intake air;
- a high pressure turbine arranged on said exhaust line, said power turbine being arranged downstream to said high pressure turbine according to the flow direction of the exhaust gases, said high pressure turbine being mechanically connected with said compressor,

- an asynchronous machine connected to said low pressure turbine.

The method according to the invention comprises the step of:

- calculating the real value of an operative parameter characteristic of the real efficiency of the power turbine, said operative parameter being calculated in function of the rotational speed of said low pressure turbine;
- comparing said real value with at least a reference value of said operative parameter wherein said reference value is characteristic of a required value efficiency of the power turbine;
- if said real value, compared with said theoretical reference value, corresponds to a real efficiency lower than said required value of efficiency, then varying the rotational speed of the power turbine by means of said asynchronous machine so as to vary said real parameter until said real efficiency is greater than or equal to said required efficiency;

As below specified many advantages can be achieved by means of the method according to the present invention. Firstly the method is based on the control of an operative parameter which depends directly from the rotational speed of the power turbine. Secondly the controlling of the rotational speed of the power turbine (and therefore of its efficiency) is performed by the asynchronous machine without any intervention on the regulation of the mass flow rate (VGT or WG) .

According to a preferred embodiment the operative parameter is the BSR (Blade speed ratio). The regulation of such parameter allows the power turbine to work always at the maximum of thermodynamic efficiency for each operating point. In other words, the method according is focused on the modulation of the BSR obtained by a variation of the rotational speed of the impeller (rim speed of the impeller) of the power turbine. The impeller diameter is mechanical fixed in its dimensions. So the speed of the impeller is the value for modulating the BSR. For example, if the BSR have to be enlarged, then the impeller speed of the power turbine is increased by the asynchronous machine.

On the contrary, by decreasing the impeller speed of the low pressure turbine, it is advantageously possible to reduce the expansion ratio of the high pressure turbine. That means the possible over-speed of the compressor connected to the high pressure turbine can be advantageously avoided. Indeed a reduction of the power turbine speed leads to a higher expansion ratio of the high pressure turbine and therefore to an higher boost pressure and a lower exhaust gas temperature. In other words by varying the expansion ratio of the high pressure compressor, as a consequence of the control of the expansion ratio of the power turbine, the boost pressure and exhaust gas temperature can be also varied and controlled.

Therefore in the case of a engine apparatus comprising a turbo-compound system, the control of the rotational speed of the power turbine according to the invention advantageously avoids the use of a WG or a VTG for the high pressure stage .

The dependent claims disclose preferred embodiments of the present invention, forming integral part of the present description.

## Brief description of the drawings

The invention will become fully clear from the following detailed description, given by way of a mere exemplifying and non limiting example, to be read with reference to the attached drawing figures, wherein:

- Fig. 1 is a schematic view of a first embodiment of an engine hybrid apparatus comprising a power turbine controllable by the method according to the present invention;
- Fig. 2 shows the curve of the efficiency of a power turbine in function of a possible operative parameter on which it is based the control method according to the present invention.
- Fig. 3 is a schematic view of a second embodiment of an engine hybrid apparatus comprising a turbo-compound system and a low pressure power turbine controllable by the method according to the present invention;
- Fig. 4 is a schematic view of a third embodiment of an hybrid engine apparatus comprising a turbo-compound system having a inversed layout and comprising a low pressure power turbine controllable by the method according to the present invention;

The same reference numerals and letters in the figures designate the same or functionally equivalent parts.

## Detailed description of the preferred embodiments

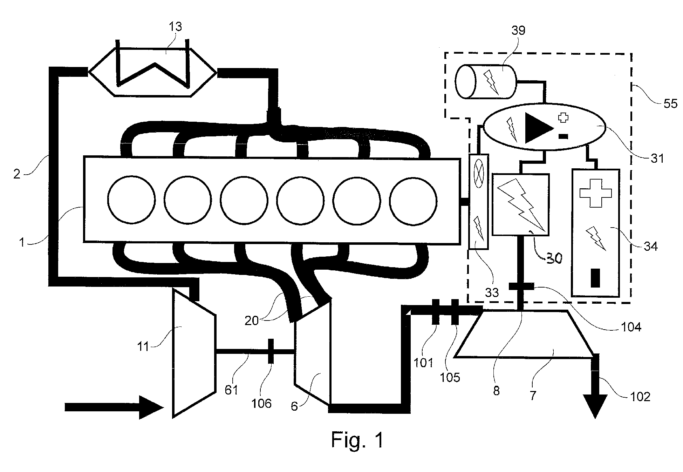

Figure 1 is a schematic illustration of an first embodiment of a hybrid engine apparatus in which the method according to the present invention can be implemented. The engine apparatus, for example of an industrial vehicle, of a ship or of another type, comprises the internal combustion engine 1, which can be a diesel engine. The apparatus comprises an intake line 2 of the engine and an exhaust line 20. Starting from the fresh air admission, on said intake line 2 is arranged, according to the route of the fresh air, at least one compressor 11 and at least one cooler 13,13'. With reference to the exhaust line 20, starting from the engine 1, on said exhaust line 20 are sequentially connected, according to the route of the exhaust gasses, a high pressure turbine (HPT) 6 and a low pressure turbine (LPT) 7. The skilled person in the art knows what "low pressure" or "high pressure" turbine means and "low pressure" or "high pressure superchargers means" in terms of flow masses, pressures and enthalpies and in view of series connections of such components. Therefore, it is also clear what "high" or "low" define clearly the features of a supercharger or of a turbine in this context. In this regard in the following description the term "compressor" and the term "supercharger" are used with the same meaning.

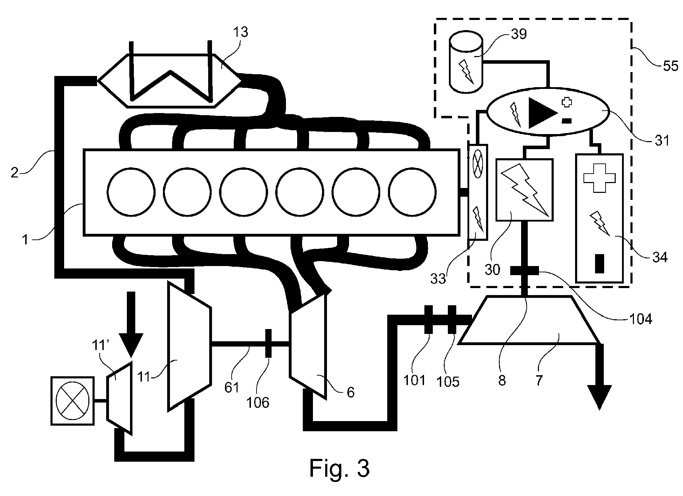

For the purpose of the present invention the expression "power turbine" wants to indicate a turbine connected to an asynchronous machine by means of which mechanical power is converted in electrical power. The "power turbine" is arranged downstream to a turbine which works at higher pressure and that is operatively connected to a compressor so as to define a turbo-compound stage. In particular the embodiments of the engine apparatus shown in the figures 1,3e 4 the "power turbine" corresponds to the low pressure turbine (LPT). Therefore in the following the expressions "low pressure turbine", "LPT" and "power turbine" should be regarded as equivalent expressions.

With reference always to Figure 1, according to the invention, the compressor 11 is directly and operatively connected to the HPT 6. More precisely the compressor 11 is driven by the HPT 6 by means of an axial shaft 61. The HPT 6 is preferably connected to the engine 1 by a double connection (twin entry). This solution allows a better transient performance at low speed by gaining the pressure pulsation of the exhaust manifold at a line cylinder engine. In this regard, the direct connection of the engine is rarely subjected to constant exhaust pressure. In pulse turbocharged diesel engines, twin-entry turbines allow exhaust gas pulsations to be optimised, because a higher turbine pressure ratio is reached in a shorter time. Thus, through the increase of the pressure ratio, positive jetting flow, by improving the all-important time interval when a mass flow with high density is passing through the turbines.

As a result of this improved exhaust gas energy utilisation, the boost pressure characteristics of the engine and, hence, the torque behaviour is improved, particularly at low engine speeds. As shown in Figure 1, in order to prevent the various cylinders from interfering with each other during the charge exchange cycles, half number of cylinders are connected into one exhaust gas manifold 20 which forms the "outlet" of said combustion engine 1. Therefore the twin-entry of the HPT 6 allows the exhaust gas flow to be fed separately through the turbine.

With reference again to figure 1, the engine apparatus comprises an electric torque converter 55 provided for converting the rotational movement of the LPT 7 in electrical energy. The converter 55 is a part of the "electric assembly" of the hybrid engine apparatus by means of which an additional power is provided, when it is required, to the crankshaft of the combustion engine. More in detail the electric torque converter 55 comprises an asynchronous machine (AM) 30 mechanically connected to said LPT 7 (power turbine). The rotor of the AM 30 is directly connected to the shaft of the LPT 7. The AM 30 is operated by means of control means 31 which can comprise, for example, an inverter or other equivalent means.

The electric torque converter 55 also comprises an accumulator 34 which can be, for example a battery or a DC bus. Such accumulator is electrically connected to AM 30 trough the control means 31 in order to be charged. The electric torque converter also comprises an electrical machine (EM) 33 electrically connected/controlled to/by the inverter 31. The EM 33 is mechanically connected to the crankshaft of the combustion engine 1 in order to provide a supplementary torque when such machine 33 works as an electric motor. In this regard, according to a first possible configuration the EA 33 can be an electric motor provided only for adding a supplementary torque to the engine. Alternatively the EM 33 could be an asynchronous machine which can work as an "electrical motor" or a "electrical generator" (for example during the braking mode of the engine) depending on the case. On this point, when an asynchronous machine is used as electrical machine 33, then the torque converter 55 preferably comprises a condenser 39. The EM 33 can get power out of the condenser 39, by the control means 31, in case of a short term demand and out of the accumulator (battery /DC bus 34) in case of long term demand. This allows to improve the transient performance of the EA 33. Moreover the condenser 39 allows to preserve the battery by slowing its aging.

The hybrid engine apparatus according to the invention comprises an electronic control unit (ECU) operatively connected to the control means 31 and indirectly connected to the asynchronous machine 30 connected to the LPT. Preferably the ECU manages both the "mechanical assembly" (i.e. the combustion engine 1, HPT 6 and compressor 11) and the "electrical assembly" (i.e. the electrical torque converter 55) of the engine apparatus so as to change its operative configurations. In particular according to the invention the ECU manages the control means 31 in order to vary the rotational speed of the LPT (power turbine). Indeed according to the invention, the method for controlling the LPT comprises the steps of:

> A1) calculating the real value of an operative parameter which depends on the rotational speed of the LPT and which is characteristic of the real efficiency of the LPT; in other words the operative parameter is calculated as a function at least of the rotational speed of the LPT; the real value of such parameter, being connected to the rotational speed of the LPT, provide an indication of the real efficiency of the LPT for a given rotational speed;

A2) comparing the real value of the operative parameter with at least a reference value which corresponds to a required value of efficiency of the LPT; the reference value is "pre-established" that is it depends on the threshold above which the LPT should constantly work;

A3) if, from the comparison between said real value of the operative parameter and said reference value, the real efficiency is lower than said required efficiency, then varying the rotational speed of the LPT by means of said asynchronous machine until the real value of the operative parameter corresponds to a real efficiency of the LPT 7 greater than or at least equal to the required efficiency. Therefore according to the invention the control of the efficiency of the LPT 7 is based on the control of the real value of an operative parameter which depends directly from the rotational speed of the LPT 7. The operative parameter chosen for controlling the LPT 7 is preferably the BLADE SPEED RATIO (BSR) which is defined as a function of the condition of the exhaust gases upstream and downstream the LPT, and also as a function of the geometry of the LPT and therefore of the its rotational speed as below indicated.

As below better specified, the real value of the BSR is compared with at least a first reference value R1-BSR and with a second reference value R2-BSR greater than the first reference value. Said reference values for the BSR define a range of values of the BSR for which the efficiency of the LPT 7 is above the required threshold (value). Said reference values of the BSR are advantageously stored in a efficiency MAP. In other words the "reference values" stored in the MAP correspond to the values that should be achieved by the BSR for maintaining the desired efficiency of the LPT.

On the basis of the comparison between the real value of the BSR and the reference values, the rotational speed of the LPT is increased or decreased, by the asynchronous machine 30, in order to vary the real value of the BSR towards the theoretical value stored in the map. More precisely the rotational speed is varied until the real value of the BSR is included in the range defined by said first reference value R1-BSR and said second reference value R2-BSR.

The variation of the speed of the LPT is performed by the AM 30 which is in its turn operated by the control means 31. The latter intervene of the AM 30 by varying the current who crossed the windings of the stator. Such variation of current determines a variation of the load on the rotor of and therefore a variation of the speed of the same rotor. That is translated into a corresponding variation of the speed of the LPT connected to the rotor. The variation of the current is a consequence of a variation of the resistance of the electric circuit. Such variation of the resistance is obtained, in its turn, by means of a variation of the frequency or of the voltage of the stator caused by the intervention of the control means 31.

With reference ton the Blade Speed Ratio (BSR), it is defined by the formula:

$$BSR = u/c$$

wherein u is the radial speed of the impeller of the LPT which depends on the geometry of the same impeller. In particular "u" can be calculated according to the formula:

$$u = (2 * \pi * n_{LPT}) * (D_{LPT}/2)$$

wherein $n_{LPT}$ and $D_{LPT}$ are respectively the speed (rpm) and the external diameter of the impeller. The parameter c is characteristic of the conditions of the exhaust gases and can be calculated according to the formula:

$$c = (2 * Cp * T * (1 - (P_3/P_4)^{((1-\gamma)/\gamma)}))^{1/2}$$

wherein $P_3$ and $P_4$ are respectively the pressure of the exhaust gases upstream and downstream the LPT and wherein T is the temperature of the exhaust gases before the LPT.

For the purpose of calculating the BSR, the engine apparatus comprise first pressure detecting means and in particular at least a first pressure sensor 101 and at least a second pressure sensor 102 arranged respectively upstream and downstream the LPT. The engine apparatus also comprises at least first temperature detecting means, comprising at least a temperature sensor 105, for detecting the temperature upstream the LPT. Moreover the engine apparatus also comprises first speed detecting means 104 for detecting the rotational speed of the power turbine 7.

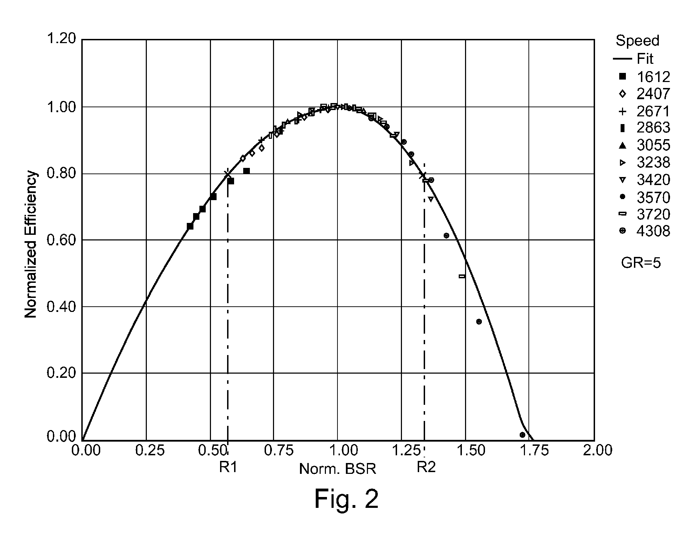

The real value (R-BSR )of the blade speed ratio is calculated by the ECU on the basis of the information provided by the pressure and temperature detecting means (sensors 101,102,105) above indicated. A PID controller of the ECU (or equivalent electronic means) performs a comparison between real value R-BSR of the BSR with a first reference value R1-BSR and a second reference value R-BSR of the BSR of the parameter stored in the MAP of the ECU. The second reference value R2-BSR is greater than the first reference value R1-BSR so that the two reference values defines a range value for which the efficiency of LPT is greater than the required value as shown in Figure 2 below better explained.

If the real value R-BSR is lower than the first reference value R1-BSR then the ECU provides a first control signal to the control means 31 of the EA. In response of such first signal the control means 31 acts on the AM 30 so as to increase the rotational speed of the LPT. If the R-BSR is greater than the second value R2-BSR then the ECU provides a second control signal to the control means 31 in response of which the control means 31 acts on the AM 30 so as to decrease the rotational speed of the LPT.

In both the cases the ECU also calculates the intensity of the variation of the speed required to vary the real value of the BSR. On the basis of such real value the ECU send to the control means the control signals above indicated to the control means 31. The latter acts on the asynchronous machine 30 so as to vary accordingly the frequency and the voltage of the stator so as to obtain the desired variation of the speed of the rotor that is the rotational speed of the LPT. Afterwards the variation of the rotational speed of the LPT a new value of the R-BSR is calculated by the ECU. The variation of the speed of the LPT is performed until the real value R-BSR is bring back in the pre-established range of values (from R1-BSr to R2-BSR). That means the increasing/decreasing of the rotational speed if performed until the R-BSR corresponds to a real efficiency greater than or equal to that required.

In this regard, the Figure 2 is a diagram of the efficiency of the LPT as a function of the BSR. In particular the curve shown in Figure 2 is defined for a particular condition of the "gear ratio" (GR) that is the ratio between the rotational speed of the LPT 7 and the rotational speed of the engine according to the formula:

$$GR= rpm_{LPT}/rpm_{engine}$$

From the formula just above, it is clear that the parameter GR depends on the geometry of the LPT and consequently it can be regarded as a fixed parameter once the LPT has been chosen. In the diagram of Figure 2, different symbols (circles, triangles, rectangles, etc) are used to indicate the efficiency as a function of the R-BSR and of a fixed value of GR. The continuous reference curve is the theoretical curve of the efficiency as a function of the BSR with a GR corresponding to 5. As shown in Figure 2, the efficiency of the LPT is above the value of 0.8 (above 80%) when the BSR is contained in a range defined between the first reference value R1-BSR and the reference second value R2-BSR which is greater than R1-BSR. Therefore according to a possible embodiment of the present invention, when the real value R-BSR is lower than R1-BNSR or higher than R2-BSR, the rotational speed of the LPT is varied (it is respectively increased or decreased) so as to bring back the real value R-BSR within the range R1-BSR and R2-BSR.

This allow to maintain the efficiency of the LPT above the 0.8. As above indicated the comparison of the R-BSR with the R1-BSR and R2-BSR is performed by the ECU (in particular by a PID controller) which verify constantly the operating point of the LPT with respect to a curve of efficiency as that shown in Figure 2. The choice of R1-BSR and R2-BSR corresponds substantially to the choice of the threshold of efficiency above which the LPT has to work.

As above indicated, according to the invention, the variation of the R-BSR is performed by acting on the asynchronous machine 30 whose rotor is connected to the shaft of the LPT. On this point, it has to be noted that the variation of the BSR is obtained without acting on the mass-flow rate that means without varying the temperature and the pressure of the exhaust gases. The control of the LPT is based only on the modulation of its rotational speed. At the same time the variation of the BSR is performed without varying the geometry of the LPT. That means the variation of the BSR is performed without varying the running condition and the performance of the engine and at the same time without using a VGT as LPT.

The method for controlling the LPT can be used also in engine apparatuses having a layout different from that shown in Figure 1. In this regard, figure 3 shown a second possible embodiment of an engine apparatus having a inlet line 2 on which a first compressor 11' and a second compressor 11" are arranged. The first compressor 11' corresponds to a low pressure compressor (LPC), while the second compressor 11" corresponds to an high pressure compressor (HPC). As shown the HPT is arranged so as to operate the HPC according to a classical layout of a turbo-compound engine apparatus. According to another advantageous aspect, the method also comprises the step of varying the BSR of the LPT as a function also of the rotational speed of the HPT and of the exhaust temperature measured downstream the HPT (that is before the LPT). For this reason the engine apparatus preferably comprises second speed detecting means (for example a speed sensor 106), for measuring the real value of the rotational speed of the HPT. The second speed detecting means is electrically connected to the ECU. The temperature detecting means above indicated (temperature sensor 105) provides to the ECU the information relative to the temperature of the exhaust gases before the LPT 7.

According to the method of the present invention, if the real value of the rotational speed of LPT 7 is lower than a speed reference value and if, at the same time, the real value of temperature measured by the temperature detecting means, is higher than a temperature reference value, then the rotational speed of the LPT is decreased by means of said asynchronous machine 30 until the real value of the rotational speed of LPT is higher than a said speed reference value and/or until the real value of said exhaust gases temperature is lower than the temperature reference value. More in detail, when the speed detecting means detect a rotational speed of the HPT lower than the speed reference value and at the same time a temperature of the exhaust gases higher than said temperature reference value the ECU send a third control signal to the control means 31 in order to reduce the rotational speed of the LPT.

As previously indicated the rotational speed of the LPT has an influence on the resistance of the gas flow trough the same LPT. At high speeds the vanes of the turbine blocks the flow more than a low speeds. That means the expansion ratio distribution of the two stages is varied accordingly. An high speed of the LPT results in a higher expansion ratio of the same LPT and a lower expansion ratio of the HPT. In such condition the speed and the boost pressure of the high pressure stage decrease. This condition is advantageous because it avoids the over-speed of the compressor connected to the HPT. However a low speed of the compressor results in an increasing of the exhaust temperature. Such limit is about 750 C° for material safety reasons.

Therefore according to the present invention the control method comprises the also the above steps of detecting continuously the rotational speed RS of the HPT (that means the rotational speed of the compressor) and detecting the temperature EGT of the exhaust gases at the outlet of the HPT. When the RS is lower than the speed reference value and at the same time EGT is higher than the temperature reference value, the rotational speed of the LPT is decreased by means of said asynchronous machine 30 independently from the efficiency of the LPT. In other words the control of the EGT value has the priority on the regulation of the BSR. The rotational speed of the LPT is decreed until the value of EGT is below the temperature reference value.

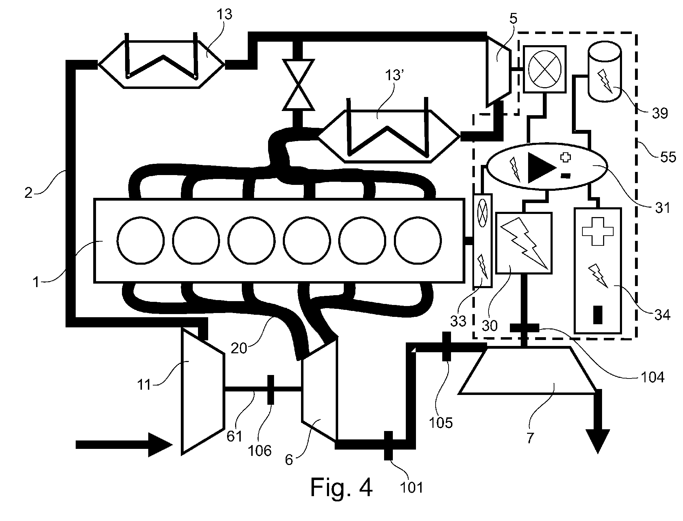

Figure 4 shows another possible embodiment of an engine apparatus on which the controlling method of the present invention can be implemented. With respect to the embodiment in Figure 2, the engine apparatus of figure 3 has an inversed layout for which the low pressure compressor 11 is connected to the HPT 6 and for which the HPC 5 is operated by an electrical motor 37. The latter is in its turn operated by the control means 31 above indicated. According to the layout shown in Figure 4, the engine apparatus comprises first bypassing means which allows to by-pass the HPC 5 when its intervention is not required. Therefore it is clear that the method for controlling a power turbine can be implemented independently from the layout of the engine apparatus. The method is preferably, but non exclusively, implemented for controlling a LPT of an engine apparatus having a turbo-compound stage. As above shown the method according to the invention allows to maintain the efficiency of the LPT above a pre-established range and at the same time allows to check the running condition of the HPT.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

Further implementation details will not be described, as the man skilled in the art is able to carry out the invention starting from the teaching of the above description.

**Claims**

1.  Method for controlling a power turbine (7) of a turbo-compound engine apparatus, said apparatus comprising:

    - an internal combustion engine (1) having an air intake line (2) and a gases exhaust line (20);
    - at least one compressor (11) on said air intake air;
    - a high pressure turbine (6) arranged on said exhaust line, said power turbine (7) being arranged downstream to said high pressure turbine (6) according to the flow direction of the exhaust gases, said high pressure turbine (6) being mechanically connected with said compressor (11),
    - an asynchronous machine (30) operatively connected to said low pressure turbine (7),
    - first speed detecting means for detecting the rotational speed of said power turbine,

    wherein said method comprises the steps of:

    A1)calculating the real value of an operative parameter of said power turbine (7), said operative parameter being calculated as a function of the rotational speed of said power turbine (7), said real value being characteristic of the real efficiency of said power turbine (7);
    A2)comparing said real value with at least a reference value of said operative parameter, said first reference value corresponding to a required value of efficiency for said power turbine;
    A3)if said real value of said operative parameter, compared with said theoretical reference value, corresponds to a real efficiency lower than said required value, then varying the rotational speed of said power turbine (7) by means of said asynchronous machine (30) so as to vary said real value of said operative parameter until said real efficiency is greater than or equal to said required value.

2. Method according to claim 1, wherein in the step A2) said real value of said operative is compared with a first reference value and with a second reference value greater than said first reference value, said reference values defining a range of values for which said efficiency of the power turbine is greater or at least equal to said required value of efficiency, and wherein in said step c) the rotational speed of said power turbine (7) is varied when said real value of said parameter is out of said range of values.

3. Method according to claim 1, wherein said operative parameter is the Blade Speed ratio (BSR) of said power turbine (7) calculated according to the formula:

$$BSR = u/c$$

wherein:

- u is the radial speed of the impeller of said power turbine (7) calculated according to the formula:

$$u = (2 * \pi * n_{LPT}) * (D_{LPT}/2)$$

$n_{LPT}$ and $D_{LPT}$ being respectively the speed (rpm) and the external diameter of the impeller;

- c is characteristic of the conditions of the exhaust gases calculated according to the formula:

$$c = (2 * Cp * T * (1 - (P_3/P_4)^{((1-\gamma)/\gamma)}))^{\wedge 1/2}$$

$P_3$ and $P_4$ being respectively the pressure of the exhaust gases upstream and downstream said power turbine (7) and wherein T is the temperature of the exhaust gases before said power turbine (7).

4. Method according to 3, wherein the rotational speed of said power turbine (7) is increased by said asynchronous machine (30), if the real value (R-BSR) of the Blade Speed Ratio is lower than a first reference value (R1-BSR) and wherein the rotational speed of said power turbine (7) is decreased by said asynchronous machine (30) if the blade speed ratio (BSR) is higher than a second reference value (R2-BSR) higher than said first reference value (R1-BSR).

5. Method according to any one of the claim 1-4, wherein said method further comprises the steps of:

B1) detecting the real value (SR) of the rotational speed of said high pressure turbine (6) and the real value (EGT) of the exhaust gases temperature downstream said high pressure turbine (6);
B2) if said real value of the rotational speed of said high pressure turbine (6) is higher than a speed reference value and if said real value of the exhaust gas temperature is lower than a temperature reference value, carrying out the steps A1), A2) and A3);
B3) if said real value of the rotational speed of said high pressure turbine (6) is lower than said speed reference value and if said real value of the exhaust gas temperature is higher than said temperature reference value, then decreasing the rotational speed of said power turbine (7) by means of said asynchronous machine (30) until said real value of the rotational speed (SR) is higher than said speed reference value and/or said real value of the exhaust gas temperature is lower than said temperature reference value.

6. Turbo compound engine apparatus comprising:

- an internal combustion engine (1) having an air intake line (2) and a gases exhaust line (20);

- at least one compressor (11) on said air intake air;
- a high pressure turbine (6) arranged on said exhaust line, said high pressure turbine (6) being mechanically connected with said compressor (11);
- a power turbine (7) arranged downstream to said high pressure turbine (6),
- an asynchronous machine (30) operatively connected to said low pressure turbine (7),
- first speed detecting means for detecting the rotational speed of said power turbine,
wherein the asynchronous machine (30) varies the rotational speed of said power turbine (7) as a function of an operative parameter characteristics of the efficiency of said power turbine (7) so as to maintain said efficiency above a pre-established required value.

7. Turbo compound engine apparatus according to Claim 6, wherein said apparatus comprises:

- pressure detecting means for detecting the pressure of the exhaust gases upstream and downstream said power turbine;
- temperature detecting means for detecting the temperature of said exhaust gases upstream said power turbine, and wherein said operative parameter is the Blade Speed ratio (BSR) of said power turbine (7) calculated according to the formula:

$$\mathrm{BSR}=\ u/c$$

wherein:
- u is the radial speed of the impeller of said power turbine (7) calculated according to the formula:

$$u=\ (2*\pi*n_{\mathrm{LPT}})*(D_{\mathrm{LPT}}/2)$$

$n_{\mathrm{LPT}}$ and $D_{\mathrm{LPT}}$ being respectively the rotational speed (rpm) and the external diameter of the impeller;
- c is characteristic of the conditions of the exhaust gases calculated according to the formula:

$$c=(2*Cp*T*(1-(P_3/P_4)\char`^((1-\gamma)/\gamma)))\char`^{1/2}$$

$P_3$ and $P_4$ being respectively the pressure of the exhaust gases upstream and downstream said power turbine (7) and wherein T is the temperature of the exhaust gases before said power turbine (7).

8. Turbo compound engine apparatus according to Claim 7 wherein said asynchronous machine (30) increases the rotational speed of said power turbine if said speed ratio (BSR) is lower than a first reference value (R1-BSR) and wherein said asynchronous machine (30) decreases the rotational speed of said power turbine if said speed ratio (BSR) is higher than a second reference value (R2-BSR) greater that the first reference value (R1-BSR).

9. Turbo compound engine apparatus according to claim 7 or 8 wherein said apparatus further comprises second speed detecting means for detecting the rotational speed of said high pressure turbine (6) and wherein said asynchronous machine (30) decreases the rotational speed of said power turbine (7) if the rotational speed of said high pressure turbine (6) is lower than a speed reference value and if said real value of the exhaust gas temperature upstream said power turbine (7) is higher than a temperature reference value.

10. Vehicle especially an industrial vehicle comprising an apparatus according to one of the claim from 6 to 9.

11. A computer program comprising computer program code means adapted to perform all the steps of any of the claims 1 to 6, when said program is run on a computer.

12. A computer readable medium having a program recorded thereon, said computer readable medium comprising computer program code means adapted to perform all the steps of any of the claims 1 to 6, when said program is run on a computer.

Fig. 1

Fig. 2

Fig. 3

Fig. 4

Europäisches
Patentamt

European
Patent Office

Office européen
des brevets

## EUROPEAN SEARCH REPORT

Application Number

EP 12 18 5627

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 222 546 A1 (ISUZU MOTORS LTD [JP]) 20 May 1987 (1987-05-20) * page 3, line 23 - page 7, line 28; claims 3,5; figures 1,3,4 * | 1-8, 10-12 | INV. F02B41/10 F02B37/00 |
| X | US 2011/094486 A1 (VUK CARL T [US]) 28 April 2011 (2011-04-28) * column 13; figure 1 * | 1,2,6, 10-12 | |
| Y | | 3,4,7,8 | |
| Y | EP 0 294 146 A1 (IZUSU MOTORS LIMITED [JP]) 7 December 1988 (1988-12-07) * column 5, line 45 - column 7, line 17 * | 3,4,7,8 | |
| A | EP 2 053 208 A1 (DEERE & CO [US]) 29 April 2009 (2009-04-29) * paragraph [0015] - paragraph [0019]; figure 1 * | 1,6 | |
| A | EP 2 159 395 A1 (DEERE & CO [US]) 3 March 2010 (2010-03-03) * the whole document * | 1,6 | |

TECHNICAL FIELDS
SEARCHED (IPC)

F02B

The present search report has been drawn up for all claims

| Place of search | Date of completion of the search | Examiner |
|---|---|---|
| Munich | 21 February 2013 | Tietje, Kai |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**ANNEX TO THE EUROPEAN SEARCH REPORT
ON EUROPEAN PATENT APPLICATION NO.** EP 12 18 5627

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2013

| Patent document cited in search report | | Publication date | Patent family member(s) | | Publication date |
|---|---|---|---|---|---|
| EP 0222546 | A1 | 20-05-1987 | CA<br>DE<br>EP<br>JP<br>JP<br>US | 1258775 A1<br>3667696 D1<br>0222546 A1<br>4028886 B<br>62101814 A<br>4694653 A | 29-08-1989<br>25-01-1990<br>20-05-1987<br>15-05-1992<br>12-05-1987<br>22-09-1987 |
| US 2011094486 | A1 | 28-04-2011 | NONE | | |
| EP 0294146 | A1 | 07-12-1988 | DE<br>EP<br>JP<br>JP<br>US | 3870714 D1<br>0294146 A1<br>5034489 B<br>63302119 A<br>4886978 A | 11-06-1992<br>07-12-1988<br>24-05-1993<br>09-12-1988<br>12-12-1989 |
| EP 2053208 | A1 | 29-04-2009 | EP<br>US | 2053208 A1<br>2009107123 A1 | 29-04-2009<br>30-04-2009 |
| EP 2159395 | A1 | 03-03-2010 | EP<br>US | 2159395 A1<br>2010050632 A1 | 03-03-2010<br>04-03-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2012060120 W